# EUROPEAN PATENT SPECIFICATION

(11) **EP 4 596 455 B1**
(45) Date of publication and mention of the grant of the patent: **14.10.2026**
(21) Application number: 25153836.9
(22) Date of filing: 24.01.2025
(51) Int. Cl.: B65G 1/00

(54) **EFFICIENT DEVICE FOR REPLACING A PALLET SUPPORTING A LOAD**
EFFIZIENTE VORRICHTUNG ZUM ERSETZEN EINER PALETTE, DIE EINE LAST TRÄGT
DISPOSITIF EFFICACE POUR REMPLACER UNE PALETTE SUPPORTANT UNE CHARGE

(30) Priority: 05.02.2024 IT 202400002379
(43) Date of publication of application: 06.08.2025
(73) Proprietor: Toppy S.r.l., 40053 Valsamoggia (BO) (IT)
(72) Inventor: PIANI, Daniele, 40050 MONTE SAN PIETRO (BO) (IT)
(74) Representative: Negrini, Elena

(56) References cited:
- CN-Y- 201 284 149
- US-A- 5 482 426
- US-A1- 2022 073 291

## Description

The present invention falls within the sector concerning the handling and management of palletized loads and pallets and refers to an efficient device for the replacement of a pallet supporting a load consisting of, for example, boxes containing goods or thinks.

In the logistics management of goods, for example of the type in which the goods or products are contained in boxes or other containers that are arranged in regular groups on pallets carrying out the palletization of such boxed goods, it may be useful or essential to transfer the boxes that constitute the load of an original pallet onto another replacement pallet.

The need to replace the original pallet supporting the respective load, consisting of boxed or otherwise packaged goods, may arise from the need to remove the original pallet because it is contaminated, polluted or infested or subject to such risks and to replace it with one that is certainly free from contamination and/or infestation or to replace pallets of one standard with others of a different standard or of special kind.

One way to manually perform this operation provides to place a replacement pallet next to the original pallet on which the boxes that make up the respective load are arranged and it provides to move the boxes of the load one by one, placing them on the replacement pallet, thus creating the palletized load again, where the lowest boxes were the highest and where these boxes are supported by the replacement pallet. To avoid the time and economic burdens and safety risks of this method of proceeding, machines have been made that are able to separate the load from the original pallet, for example by lifting all the palletized goods and the respective pallet, rotating this set of goods and the original pallet upside down, placing the latter on top to remove it and replace it with the replacement pallet; a further rotation upside down and translation downwards brings the replacement pallet to a lower position and resting on the ground, thus obtaining the palletization of the goods again.

These known devices for replacing pallets of palletized goods have the disadvantage of being very complex and very expensive.

Documents CN 201 284 149 Y (Zhiyue Chen [CN]), which discloses the features of the preamble of claim 1, US 2022/073291 A1 (Piani Daniele [IT]) and US 5 482 426 A (White Gary L [US]) provide a generic frame to the invention.

Another disadvantage of these known devices is that they are very bulky.

A further disadvantage of such known devices is that they may require operational access from multiple sides.

Another disadvantage is that such known devices do not allow the loads of two or more original pallets to be superimposed on a single replacement pallet to solve problems or to optimise the management and/or storage of palletised goods and/or to reduce the number of replacement pallets used.

There are also known devices in which the replacement of the original pallet occurs by making it slide under the load by means of the push exerted on it by the new replacement pallet moved by a pallet truck or a lift until such replacement pallet takes the place of the original one under the load.

A disadvantage of these latter known push devices is that the pallets, due to their geometric irregularities or inhomogeneity of their materials or asymmetries of the load, could deviate slightly during the sliding motion and/or be subject to jamming and/or contact fixed elements of the devices.

Another disadvantage of push devices is that the sliding of the pallets requires a considerable push force to be exerted on them and therefore requires the use of pallet trucks and motorized lifts.

A purpose of the present invention is to propose an efficient device, according to claim 1, for the replacement of a pallet supporting a load that is relatively simple, economical, reliable and versatile for operators with pallets and loads of almost any type.

Another purpose is to propose a device capable of reducing or eliminating the sliding of the original pallet during its replacement translation.

A further purpose is to propose a device capable of guiding the translation of the pallets and almost free from jamming or blocking of the same.

Another purpose is to propose a device that is small in size and does not involve maneuvering areas that extend beyond its base.

A further purpose is to propose a device capable of accumulating the original pallets and that allows them to be removed from the front or rear.

Another purpose is to propose a device that can be used with palletized goods having pallets and loads of different sizes and types.

A further purpose is to propose a device that can be made even without any electrical component and that can also be used in environments with fire and explosion risks.

The features of the invention are highlighted below with particular reference to the attached drawings in which:
- figure 1 illustrates an axonometric and front view of the efficient device for the replacement of a pallet supporting a load object of the present invention, a portion of which has been partially removed to better show a rear part, consisting of a window;
- figure 2 illustrates an axonometric, exploded and enlarged view of an element of the device of figure 1 consisting of the translating member of figure 1;
- figure 3 illustrates a lateral and partially fractured orthogonal projection view of the translating member of figure 2 in its assembled condition;
- figure 4 illustrates a front orthogonal projection view of the translating member of figure 3;
- figure 5 illustrates an enlarged view of a detail of figure 4;
- figure 6 illustrates from above a rod element of figure 2 in its extreme longitudinal sliding positions with respect to an attachment of the translating member;
- figure 7 illustrates an orthogonal top view of the translating member of figure 3 in its front condition;
- figures 8 and 9 illustrate partial lateral and top views respectively of the translating member of figure 7 supporting a pallet to be replaced and placed at the base of a load (not illustrated) and in its front condition;
- figures 10 and 11 illustrate partial lateral and top views respectively of the translating member of figure 9 supporting a pallet placed at the base of a load (not illustrated) and in its front condition including a replacement pallet approaching the front portion of the device;
- figures 12 and 13 illustrate the translating member of figures 10 and 11 in a condition in which the contact of the replacement pallet with such translating member has caused the sliding of the rod element in its rearmost condition;
- figure 14 shows an axonometric and enlarged view of an element of figure 1.

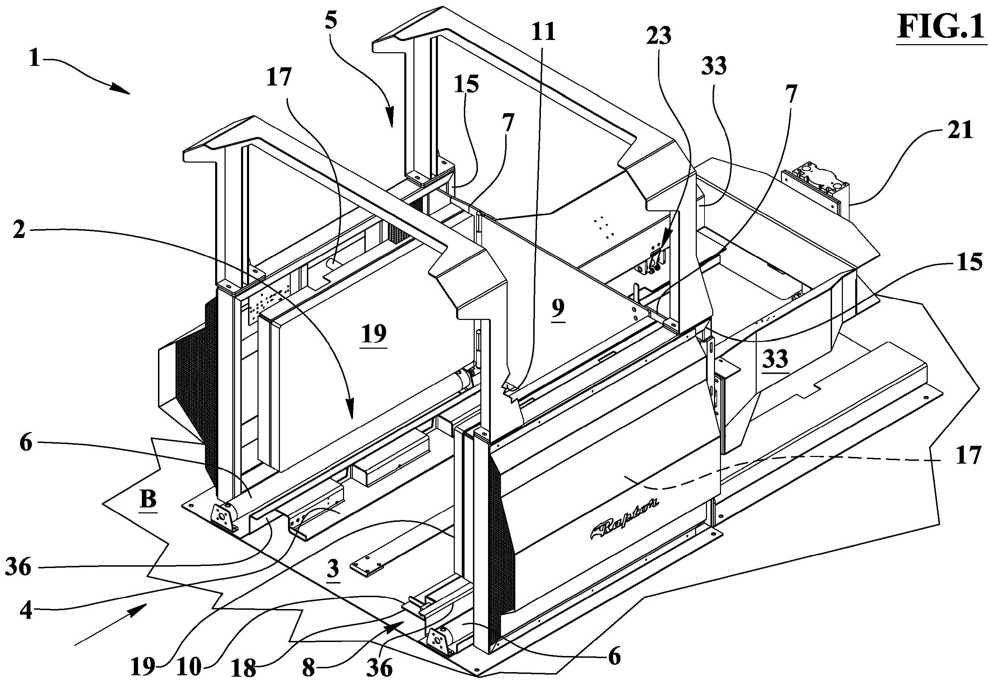

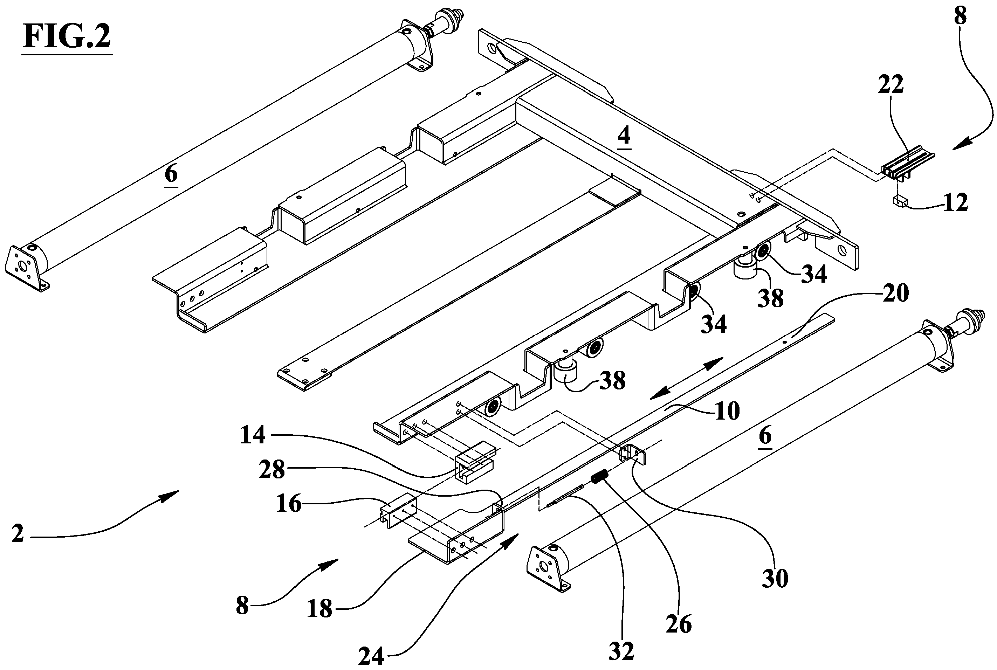

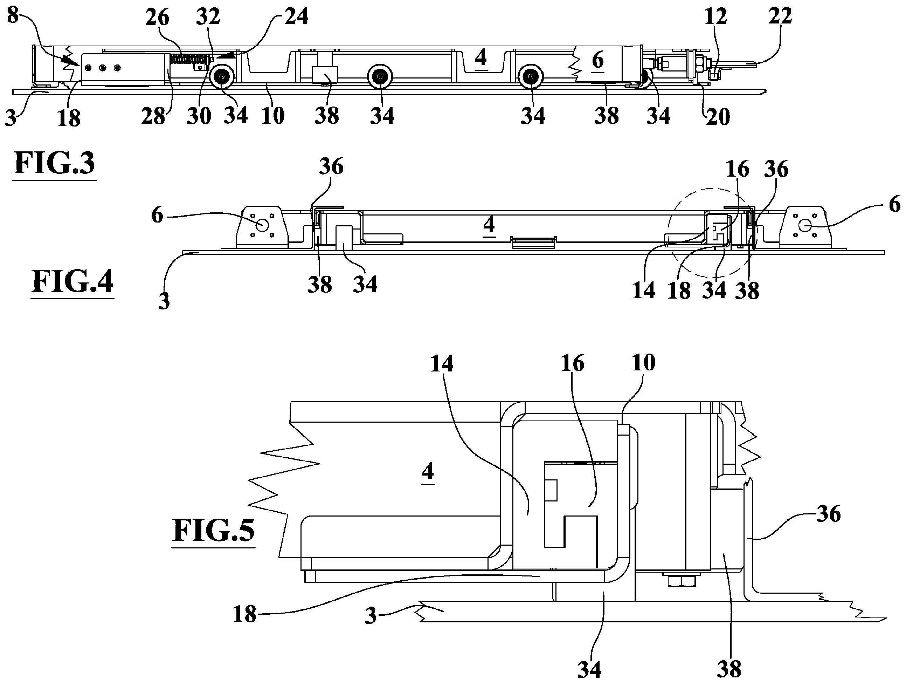

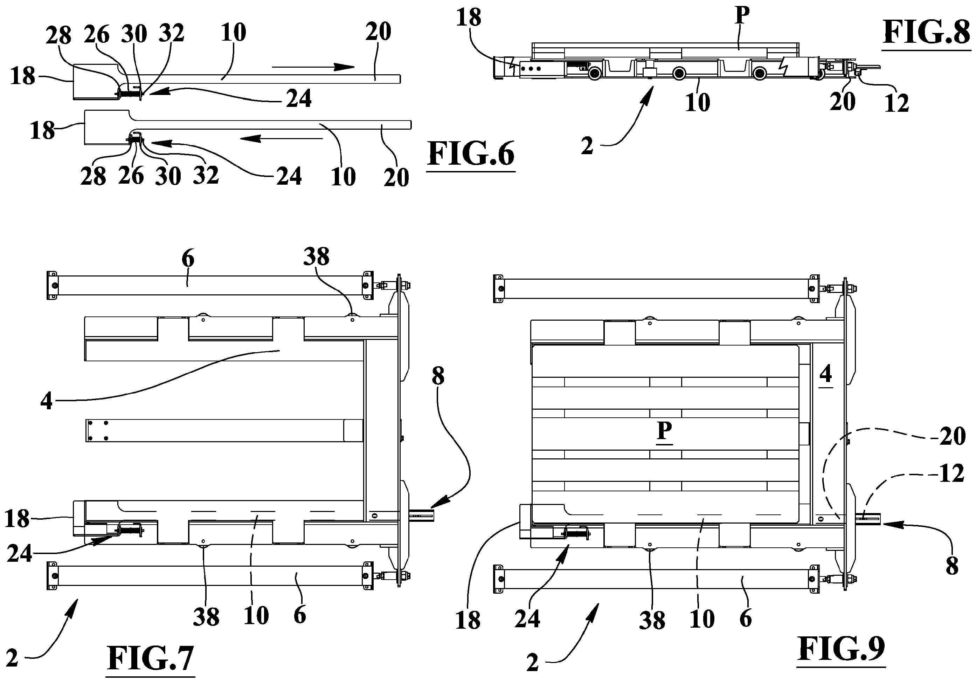

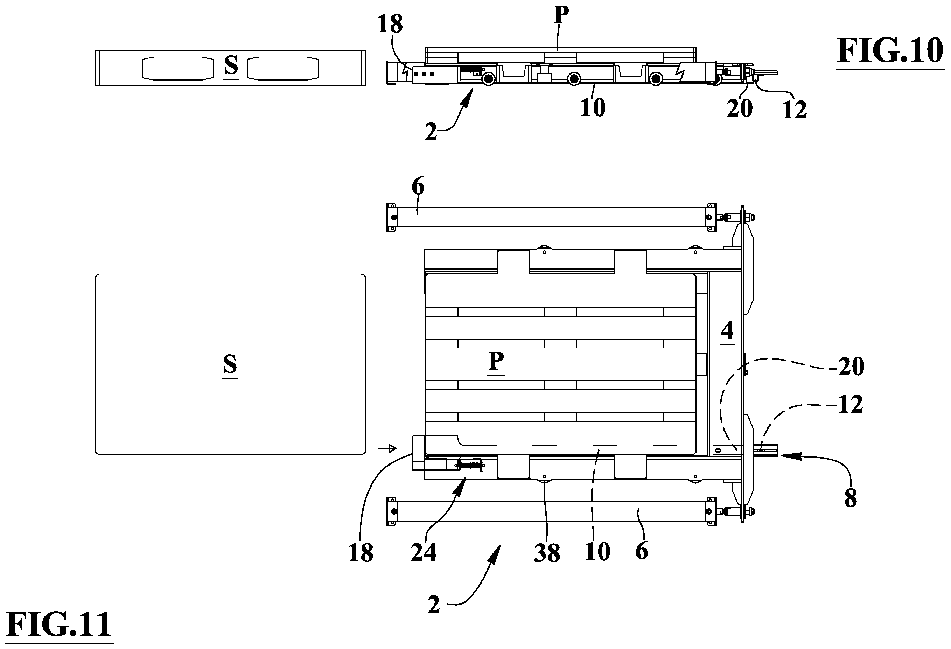

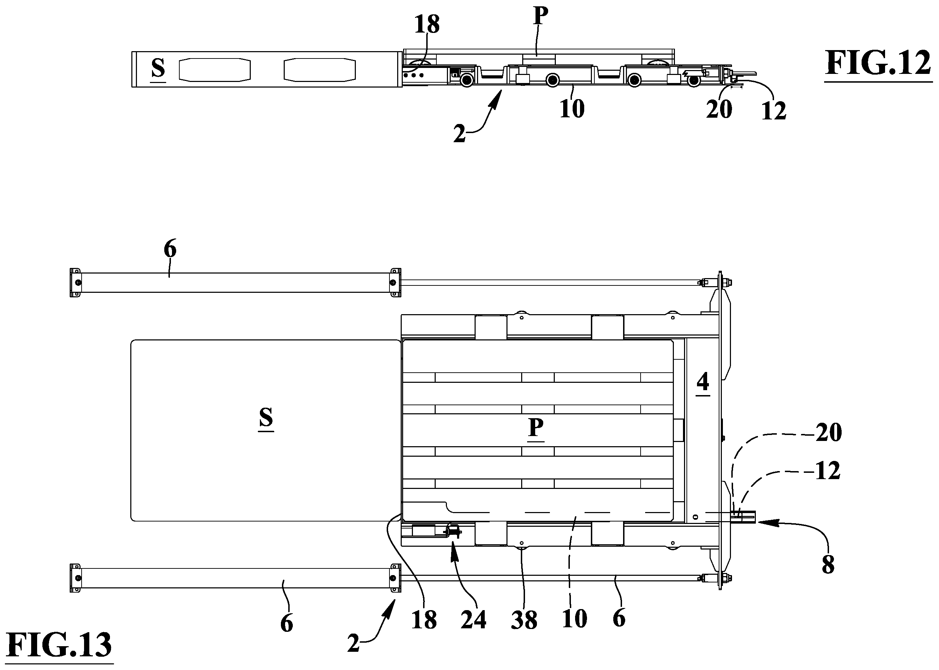

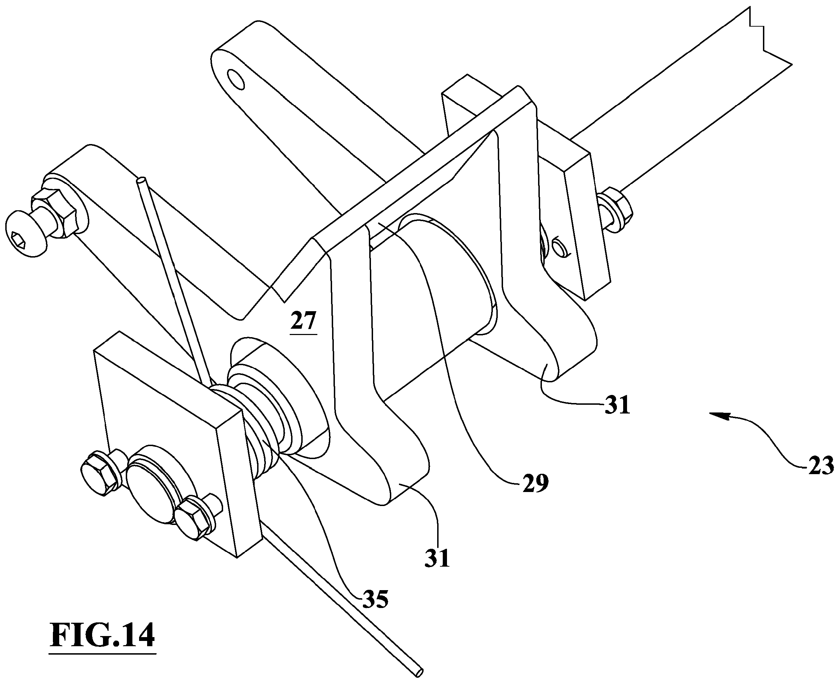

With reference to figures 1-14, numeral 1 indicates the efficient device for the replacement of a pallet supporting a load, object of the present invention.

This device is assigned to remove a pallet to be replaced P supporting a load by replacing it with a replacement pallet S for said load.

In the following, the terms front and rear, referring to the device or its parts, refer respectively to the left and right portions of the device depicted in figures 1-3 and 7-13, i.e. the front portion of the device is that portion to which the pallet to be replaced P, with its respective load, approaches the device at the beginning of a replacement cycle.

These terms front and rear, when referred to pallets, designate the corresponding portions during their approach translation towards the device 1.

The device 1 comprises:
- a sliding element 3 connected to at least one frame element 5 and assigned, in an operating condition of the device 1, to be fixed or placed on a nearly horizontal floor or plane B; said sliding element 3 defines a sliding plane parallel and adjacent or distanced from the floor or from the plane B only by its own thickness and has a predetermined slide length at least equal or longer, preferably double, the sum of the maximum lengths of such pallets P, S;
- a vertical bulkhead element 9, placed transversely to the median portion of the sliding element 3 and raised with respect to the latter forming a lower window 11 between the front and rear portions of the sliding element 3.

The sliding element 3 may consist of a set of metal bands or strips or, as preferable and as illustrated in the figures, of a single metal plate, for example in steel resting or fixed to the floor or plane B.

The bulkhead element 9 may consist of a grid, of a set of mutually interconnected bars or plates or, as preferable and as illustrated in the figures, of a metal plate having a width approximately equal to that of the sliding element 3 and a height between the maximum expected height of the load and one tenth of it.

Said device 1 also comprises at least one translating member 2 provided with:
- a support element 4 assigned to support at least one pallet to be replaced P and movable along the sliding element 3 to translate such pallet P from the front to the rear portion of the sliding element 3 through the window 11 whose upper edge (which corresponds to the lower edge of the bulkhead element 9) is at a predetermined height equal to or slightly higher than the height of the upper face of the pallet to be replaced P supported by the support element 4;
- at least one actuator element 6 interconnected between the sliding element 3 or the at least one frame element 5 and the support element 4 to translate the latter 4, alone or together with the pallet to be replaced P, along the sliding element 3;
- a detection and actuation member 8 connected to the support element 4 and assigned to detect the proximity of the replacement pallet S to the front of the support element 4 and to actuate the at least one actuator element 6 in correspondence with said proximity.

The support element 4 of the translating member 2 is provided with a housing assigned to accommodate the pallet to be replaced; this housing can reproduce the shape of the lower face of the pallet to be replaced, for example and as illustrated in the figures, the housing can comprise three elongated, parallel and spaced metal plates, each assigned to abut with a corresponding longitudinal element of the lower face of the pallet. Preferably, and as illustrated in the figures, the front edges of at least the lateral plates of the housing are folded upwards and are assigned to contact the rear edge of the pallet to be replaced, preventing it from sliding with respect to the housing.

The longitudinal lateral portion of each of the lateral plates of the housing of the support element 4 may be provided with concave walls or seats that are open at least downwards. These walls or seats of the lateral edges of the support element 4 constitute as many lateral shoulders of the housing assigned for the correct lateral positioning of the pallet to be replaced; such lateral concave seats of the support element 4 can house at least one or more first rolling means 34, for example consisting of idle rollers, whose rotation axes are horizontal and assigned to roll on the sliding element 3 for a smooth translation of the support element 4 on the sliding element 3 from and towards the rear portion of the latter 3.

The at least one actuator element 6 of the translating member 2 is preferably of the linear type and can be electric, hydraulic, or preferably pneumatic. Preferably, and as illustrated in the figures, the device comprises two actuator elements 6 of the pneumatic cylinder type placed at the sides of, and parallel to, the support element 4 and, each, having one end, for example the static one, fixed to the sliding element 3 or to at least one frame 5 and the other end, for example the dynamic one, fixed to the support element 4 to translate the latter 4, alone or together with the pallet to be replaced P, along the sliding element 3, from the front portion to the rear portion and vice versa.

Alternatively, the actuator element or elements 6 can be in a different number and differently positioned as long as they are able to translate the support element 4, alone or together with the pallet to be replaced P, along the sliding element 3 from the front portion to the rear portion and vice versa; for example, each actuator element can be of the belt or ring chain type and driven by a motor.

The detection and actuation member 8 of the translating member 2 comprises a detection means 10 movable along a stroke of predetermined length, parallel to the translation of the support element 4 between two extreme protruding conditions and aligned with respect to the front edge of the support element 4 and it 8 comprises a control means 12 fixed or connected to the rear portion of the support element 4 and associated with the detection means 10. Said control means 12 is assigned to actuate the at least one actuator element 6 when the replacement pallet places the detection means 10 in a position other than the extreme protruding condition. In other words, when the replacement pallet S is brought towards the device, and inside it, and its front side approaches, or meets, the front part of the detection means 10 protruding from the support element 4, such detection means 10 passes from a condition of separation from the control means 12 to a condition of proximity and activation of the control means 12 which consequently powers the at least one actuator element 6.

Preferably and as illustrated, the detection means 10 is elongated in shape and is parallel to the translation of the support element 4 to which it is slidably connected by means of fixed 14 and movable 16 guide elements and its 10 front end 18, in the extreme protruding condition, protrudes from the front edge of the support element 4 by a length defining the predetermined length of the stroke of the detection means 10. This front end 18 is assigned to abut the front edge of the replacement pallet S and the rear terminal portion 20 of the detection means 10 has a length approximately equal to the predetermined length of the stroke. In all conditions other than the extreme protruding condition of the detection means 10, its 10 rear terminal portion 20 faces the control means 12, activating it. The control means 12 is fixed to the rear portion of the support element 4 by means of a fixed attachment or, preferably, by means of an adjustable attachment 22 so that when the detection means 10 is in its extreme protruding condition, it 10 is sufficiently spaced from the control means 12 so as not to activate it but as soon as the replacement pallet moves the detection means 10 from such extreme protruding condition, it 10 activates the control means 12.

To maintain the detection means 10 in its extreme protruding condition in the absence of feedback with the replacement pallet, the detection and actuation member 8 comprises an elastic return element 24 acting between the support element 4 and the detection means 10 imparting to the latter 10 an elastic force directed towards the extreme protruding condition.

The elastic return element 24 may consist of any element interposed between the support element 4 and the detection means 10, for example a spring acting in extension between them, a pneumatic piston of the type called gas spring, or others but preferably such elastic return element 24 comprises a helical spring 26 compressed between a transverse shoulder 28 of the detection means 10 and a transverse shelf 30 fixed to the support element 4 and comprises a spring guide 32 slidably engaged in the coils of the helical spring 26 and having one end fixed to the transverse shoulder 28 or to the transverse shelf 30 and the other end sliding in a respective seat obtained in the transverse shelf 30 or in the transverse shoulder 28 or vice versa.

The maximum protrusion of the front end 18 of the detection means 10 and the rear terminal portion 20 of the detection means 10 have lengths equal to or greater than the desired displacement that the pallet to be replaced P must run to completely pass through the window 11 when the replacement pallet S is placed under the load. This is achieved with the correct sizing of the detection means 10 and the elastic return element 24 and, with the correct adjustment of the adjustable attachment 22 with respect to the longitudinal dimensions of the intermediate part of the device, i.e. the part that includes the bulkhead element 9 and the portions immediately upstream and downstream of it.

The sliding element 3 can also be provided with a pair of guides 36, for example consisting of metal profiles with an "L" section having respective longitudinal walls that are vertical and parallel to the translation of the support element 4 and comprising a plurality of second rolling means 38. The rotation axes of the second rolling means 38 are vertical and are fixed to respective lateral edges of the support element 4, preferably and in particular also the second rolling means 38 are housed in the lateral concave seats of the support element 4 for the first rolling means 34. These second rolling means 38 roll along the guides 36 to determine the direction of said translation.

The frame element 5 of the device comprises two lateral supports 15, each provided with a rectangular or "U" shaped lattice and fixed vertically and laterally to the load portion of the sliding element 3 laterally and externally with respect to the support element 4 and to the two actuator elements 6. The lattice of each lateral support 15 comprises at least one respective upright 7. The two uprights 7 are spaced apart, vertical and fixed to respective and opposite sides of the median portion of the sliding element 3 separating its front, load portion from the rear accumulation portion. The bulkhead element 9 is hinged to one of these uprights 7 and in the closed condition it abuts with the other upright 7 so that it can never enter the rear portion of the device. In its open condition, the bulkhead element 9 allows the pallets to be replaced collected in the accumulation portion to be transported even if it does not have its own rear exit openings.

The device also comprises a manual control connected to the two actuator elements 6 for the return of the support element 4 to the front portion after the removal of the pallet to be replaced and its deposit in the rear collection portion.

Each lateral support 15 of the frame element 5 can be provided with a respective translator 17 assigned to move corresponding lateral walls 19, mutually parallel and vertical, in mutual approach to tighten the load at least during the replacement of the pallet to be replaced P with the replacement pallet S and in mutual spacing to release the load at the end of said replacement.

Preferably all the active parts of the device, such as the actuators and in particular the two actuator elements 6 and any translators 17 and the respective controls, in particular the control means 12 of the detection and actuation member 8 and the manual return actuation are of the pneumatic type. The invention provides that the control means 12 can be of the valve type with actuation lever operated by the rear terminal portion 20 of the detection means 10 or preferably it can be of the proximity detection valve type (also called "pneumatic proximity switch"); in this way it is possible to create the device using exclusively pneumatic components, or without electrical parts, eliminating the risk of electric arcs or sparks, thus making the device compatible with environments with high fire or explosion risks. Alternatively, said active parts and drives of the device can be of any type, including electric, hydraulic or similar.

The device 1 comprises two shelf elements 21, lateral to the accumulation portion of the support element 4 and operated vertically by at least one lifting actuator element 33 between a lower position, in which said shelf elements 21 meets with the sliding element 3 or with the floor, and an upper condition in which it is raised; each of these shelf elements 21 is provided with at least one hooking member 23 assigned, in the terminal descent stroke of the respective shelf elements 21, to hook a respective side of a pallet to be replaced P arranged in the accumulation portion of the sliding element 3, or on the side of the window 11 opposite the loading portion; where each hooking member 23 comprises a body 27 pivotally hinged to the respective shelf element 21 to rotate around an axis parallel to the direction of advancement, such body 27 has an arm 29 that extends approximately in a radial direction from the body and is kept elastically protruding from the respective shelf element 21 by means of an elastic element 35 associated with said body 27 which also comprises at least one protruding abutment 31 assigned to abut with the sliding element 3 or with the floor in the lower position of said shelf element 21 to rotate the hooking member 23 by placing the arm 29 inside the profile of its own shelf element 21.

In the initial operating condition, in which the support element 4 is placed above the front portion of the sliding element 3, the pallet to be replaced P with the respective load are placed, by pallet trucks or by lifts operated by an operator, above the support element 4 and the operator, by means of said pallet truck or lift, presses the front edge of a replacement pallet S against the front edge of the support element 4 activating the detection and actuation member 8 which then actuates the at least one actuator element 6 translating the support element 4 towards the rear portion of the sliding element 3 allowing the replacement pallet S to advance with little effort and take the place of the pallet to be replaced P under the load; where the load is prevented from translating by the bulkhead element 9.

## Claims

1. Efficient device for replacing a pallet to be replaced (P) supporting a load with a replacement pallet (S) for said load and comprising:
- a slide element (3) connected to at least one frame element (5) and assigned, in an operating condition of the device (1), to be fixed or placed on an almost horizontal floor or plane (B), said slide element (3) defines a sliding plane parallel and adjacent to the floor or plane (B) and has a predetermined slide length;
- a vertical bulkhead element (9), placed transversally to the middle portion of the slide element (3) and raised with respect to the latter, forming a lower window (11) between the front and rear portions of the slide element (3);
said device (1) includes at least one translating member (2) provided with:
- a support element (4) assigned to support at least one pallet to be replaced (P) and movable along the slide element (3) to translate this pallet (P) from the front to the rear portion of the slide element (3) through the window (11) whose upper edge is at a predetermined height;
- at least one actuator element (6) interconnected between the slide element (3) or the at least one frame element (5) and the support element (4) to translate the latter (4), alone or together with the pallet to be replaced (P), along the slide element (3);
**characterized in that** the at least one translating member (2) is further providing a detection and actuation member (8) connected to the support element (4) and assigned to detect the proximity of the replacement pallet (S) to the front part of the support element (4) and to actuate the at least one actuator element (6) when said proximity is detected.

2. Device according to claim 1 **characterized in that** the detection and actuation member (8) includes a detection means (10) movable along a stroke of predetermined length, parallel to the translation of the support element (4) between two extreme conditions respectively protruding from and aligned with the front edge of the support element (4) and includes a control means (12) associated with the detection means (10) and assigned to operate the at least one actuator element (6) when the replacement pallet places the detection means (10) in a position other than the extreme protruding condition.

3. Device according to claim 2 **characterized in that** the detection means (10) is elongated in shape and parallel to the translation direction of the support element (4) to which it is slidably connected by means of fixed (14) and mobile (16) guide elements; the front end (18) of the elongated detection means (10), in the extreme protruding condition, protrudes from the front edge of the support element (4) by a length defining the predetermined length of the stroke of the detection means (10) and such front end (18) is assigned to match with the front edge of the replacement pallet (S) and its (10) rear terminal portion (20) has a length approximately equal to the predetermined stroke length and in all conditions other than the extreme protruding condition of the detection means (10) faces the control means (12), activating it, where the latter (12) is fixed to the rear portion of the support element (4) by means of a fixed or adjustable attachment (22).

4. Device according to claim 3 **characterized in that** the detection and actuation member (8) includes an elastic return element (24) acting between the support element (4) and the detection means (10) imparting to the latter (10) an elastic force directed towards the extreme protruding condition, where such elastic return element (24) includes a tensioned spring or it (24) includes a helical spring (26) compressed between a transverse shoulder (28) of the detection means (10) and a transverse shelf (30) fixed to the support element (4) and includes a spring guide (32) slidably engaged into the coils of the helical spring (26) and having one end fixed to the transverse shoulder (28) or to the transverse shelf (30) and the other end slidable inside a respective seat obtained in the transverse shelf (30) or in the transverse shoulder (28) or it (24) comprises other resilient means.

5. Device according to claim 3 or 4 **characterized in that** the maximum protrusion of the front end (18) of the detection means (10) and the rear terminal portion (20) of the detection means (10) have lengths equal to or greater than the needed displacement that the pallet to be replaced (P) must complete to completely cross the window (11) when the replacement pallet (S) is placed under the load.

6. Device according to any of the previous claims **characterized in** comprising a plurality of first rolling means (34) whose rotation axes are horizontal and fixed to respective lateral edges of the support element (4) for the translation of the latter (4) on the slide element (3).

7. Device according to any of the previous claims **characterized in that** the slide element (3) is provided with a pair of guides (36) having respective longitudinal walls vertical and parallel to the translation direction of the support element (4) and in comprising a plurality of second rolling means (38) whose rotation axes are vertical and fixed to respective lateral edges of the support element (4); where such second rolling means (38) roll along the guides (36) to determine the direction of said translation.

8. Device according to any of the previous claims **characterized in that** the frame element (5) includes two uprights (7) spaced apart, vertical and fixed to respective and opposite sides of the central portion of the slide element (3) separating a front loading portion by a rear storage portion of the latter (3) and **in that** the bulkhead element (9) is hinged to one of such uprights (7) and in the closed condition it abuts with the other upright (7) while in its open condition it allows to remove the pallets to be replaced collected in the storage portion.

9. Device according to claim 8 **characterized in that** the frame element (5) carries a pair of lateral supports (15) vertical and placed laterally to the load portion of the support element (4); where such lateral supports (15) are provided with respective translators (17) assigned to move corresponding lateral walls (19) mutually parallel and vertical, in mutual approach to tighten the load at least during the replacement of the pallet to be replaced (P) with the replacement pallet (S) and in mutual detachment to release the load at the end of said replacement.

10. Device according to any of the previous claims **characterized in** comprising two shelf elements (21), lateral to the storage portion of the support element (4) and operated vertically by at least one lifting actuator element (33) between a lower position, in which such shelf element (21) meets the slide element (3) or with the floor, and an upper condition in which it is raised; each of these shelf elements (21) is provided with at least one hooking member (23) assigned, in the terminal descent stroke of the respective shelf element (21), to hook a respective side of a pallet to be replaced (P) placed in the storage portion of the slide element (3), that is on the side of the window (11) opposite to the loading portion; where each hooking member (23) includes a body (27) rotatably pivoted to the respective shelf element (21) to rotate around an axis parallel to the translation direction of the slide element (3), such body (27) has an arm (29) which extends approximately in a radial direction from the body and kept elastically protruding from the respective shelf element (21) by means of an elastic element (35) associated with said body (27) which furthermore includes at least one protruding abutment (31) assigned to meet with the slide element (3) or with the floor (B) in the lower position of such shelf element (21) to rotate the hooking member (23) placing the arm (29) inside the profile of its shelf element (21).

## Patentansprüche

1. Effiziente Vorrichtung zum Ersetzen einer zu ersetzenden Palette (P), die eine Last trägt, durch eine Ersatzpalette (S) für die Last, und umfassend:
- ein Gleitelement (3), das mit mindestens einem Rahmenelement (5) verbunden ist und in einem Betriebszustand der Vorrichtung (1) vorgesehen ist, auf mindestens einem horizontalen Boden oder einer Ebene (B) befestigt oder darauf platziert zu werden, wobei das Gleitelement (3) eine Gleitebene definiert, die parallel zu und angrenzend an den Boden oder die Ebene (B) ist und eine vorbestimmte Gleitlänge aufweist;
- ein vertikales Trennwandelement (9), das quer zum mittleren Bereich des Gleitelements (3) angeordnet ist und darauf bezogen angehoben ist, wobei es ein unteres Fenster (11) zwischen dem vorderen und hinteren Bereich des Gleitelements (3) bildet,
wobei die Vorrichtung (1) mindestens ein Schiebeteil (2) umfasst, das ausgestattet ist mit:
- einem Trägerelement (4), das vorgesehen ist, um mindestens eine zu ersetzende Palette (P) zu tragen und entlang des Gleitelements (3) beweglich ist, um diese Palette (P) von dem vorderen zu dem hinteren Bereich des Gleitelements (3) durch das Fenster (11) zu verschieben, dessen oberer Rand sich auf einer vorbestimmten Höhe befindet;
- mindestens einem Betätigungselement (6), das zwischen dem Gleitelement (3) oder dem mindestens einen Rahmenelement (5) und dem Trägerelement (4) zwischengeschaltet ist, um das Trägerelement (4) alleine oder zusammen mit der zu ersetzenden Palette (P) entlang des Gleitelements (3) zu verschieben;
**dadurch gekennzeichnet, dass** das mindestens eine Schiebeteil (2) des Weiteren ein Erkennungs- und Betätigungsteil (8) bereitstellt, das mit dem Trägerelement (4) verbunden ist und vorgesehen ist, die Nähe der Ersatzpalette (S) zu dem vorderen Teil des Trägerelements (4) zu erkennen und das mindestens eine Betätigungselement (6) zu betätigen, wenn diese Nähe erkannt wird.

2. Vorrichtung gemäß Anspruch 1, **dadurch gekennzeichnet, dass** das Erkennungs- und Betätigungsteil (8) ein Erkennungsmittel (10) umfasst, das entlang eines Hubs vorbestimmter Länge beweglich ist, parallel zu der Verschiebung des Trägerelements (4) zwischen zwei Extremzuständen, die jeweils vorspringen von und ausgerichtet sind mit dem vorderen Rand des Trägerelements (4) und ein Steuermittel (12) umfasst, das dem Erkennungsmittel (10) zugeordnet ist und vorgesehen ist, das mindestens eine Betätigungselement (6) zu betreiben, wenn die Ersatzplatte das Erkennungsmittel (10) in einen anderen als den extrem vorspringenden Zustand platziert.

3. Vorrichtung gemäß Anspruch 2, **dadurch gekennzeichnet, dass** das Erkennungsmittel (10) eine längliche Form aufweist und parallel zu der Schieberichtung des Trägerelements (4) ist, mit dem es gleitbar über feste (14) und mobile (16) Führungselemente verbunden ist; das vordere Ende (18) des länglichen Erkennungsmittels (10) springt im extrem vorspringenden Zustand von dem vorderen Rand des Trägerelements (4) um eine Länge vor, die die vorbestimmte Länge des Hubs des Erkennungsmittels (10) definiert und ein solches vorderes Ende (18) ist vorgesehen, um mit dem vorderen Rand der Ersatzpalette (S) übereinzustimmen und der hintere Endbereich (20) des Erkennungsmittels (10) weist eine Länge auf, die in etwa der vorbestimmten Hublänge entspricht und ist in allen Zuständen des Erkennungsmittels (10), außer dem extrem vorspringenden Zustand, dem Steuermittel (12) zugewandt, wobei es dieses aktiviert, wobei das Steuermittel (12) an dem hinteren Bereich des Trägerelements (4) mittels einer festen oder einstellbaren Befestigung (22) befestigt ist.

4. Vorrichtung gemäß Anspruch 3, **dadurch gekennzeichnet, dass** das Erkennungs- und Betätigungsteil (8) ein elastisches Rückstellelement (24) umfasst, das zwischen dem Trägerelement (4) und dem Erkennungsmittel (10) agiert und auf das Erkennungsmittel (10) eine zu dem extrem vorspringenden Zustand gerichtete elastische Kraft ausübt, wobei ein solches elastische Rückstellelement (24) eine gespannte Feder umfasst oder es umfasst eine Schraubenfeder (26), die zwischen einer quer verlaufenden Schulter (28) des Erkennungsmittels (10) und einem an dem Trägerelement (4) befestigten quer verlaufenden Absatz (30) komprimiert ist und eine Federführung (32) umfasst, die gleitbar in den Windungen der Schraubenfeder (26) aufgenommen ist und deren eines Ende an der quer verlaufenden Schulter (28) oder dem quer verlaufenden Absatz (30) befestigt ist und sich das andere Ende gleitbar in einer entsprechenden Aufnahme befindet, die in dem quer verlaufenden Absatz (30) oder in der quer verlaufenden Schulter (28) vorgenommen ist, oder das elastische Rückstellelement (24) umfasst andere elastische Mittel.

5. Vorrichtung gemäß Anspruch 3 oder 4, **dadurch gekennzeichnet, dass** der maximale Vorsprung des vorderen Endes (18) des Erkennungsmittels (10) und der hintere Endbereich (20) des Erkennungsmittels (10) Längen aufweisen, die dem erforderlichen Versatz, den die zu ersetzende Palette (P) zurücklegen muss, um vollständig durch das Fenster (11) zu treten, entsprechen oder größer sind wenn die Ersatzpalette (S) unter der Last platziert wird.

6. Vorrichtung gemäß einem der vorhergehenden Ansprüche, **dadurch gekennzeichnet, dass** sie eine Vielzahl erster Rollenmittel (34) umfasst, deren Rotationsachsen horizontal sind und an entsprechenden Seitenrändern des Trägerelements (4) befestigt sind, um das Trägerelement (4) auf dem Gleitelement (3) zu verschieben.

7. Vorrichtung gemäß einem der vorgehenden Ansprüche, **dadurch gekennzeichnet, dass** das Gleitelement (3) mit einem Paar Führungen (36) versehen ist, die entsprechende Längswände aufweisen, die vertikal und parallel zu der Schieberichtung des Trägerelements (4) sind und dadurch, dass sie eine Vielzahl zweiter Rollenmittel (38) aufweisen, deren Rotationsachsen vertikal sind und an entsprechenden seitlichen Rändern des Trägerelements (4) befestigt sind; wobei solche zweiten Rollenmittel (38) entlang der Führungen (36) rollen, um die Richtung der Verschiebung zu bestimmen.

8. Vorrichtung gemäß einem der vorhergehenden Ansprüche, **dadurch gekennzeichnet, dass** das Rahmenelement (5) zwei Ständer (7) umfasst, die beabstandet von, senkrecht zu und befestigt an entsprechenden und gegenüberliegenden Seiten des zentralen Bereichs des Gleitelements (3) sind und einen vorderen Ladebereich von einem hinteren Lagerbereich des Gleitelements (3) trennen, und dadurch, dass das Trennwandelement (9) an einen der Ständer (7) über ein Scharnier befestigt ist und in dem geschlossenen Zustand an dem anderen Ständer (7) anliegt, während es in seinem geöffneten Zustand ermöglicht, dass die zu ersetzenden und in dem Lagerbereich gesammelten Paletten entfernt werden.

9. Vorrichtung gemäß Anspruch 8, **dadurch gekennzeichnet, dass** das Rahmenelement (5) ein Paar seitlicher Stützen (15) trägt, die senkrecht und seitlich zu dem Ladebereich des Trägerelements (4) platziert sind, wobei solche seitlichen Stützen (15) mit entsprechenden Schieber (17) versehen sind, die vorgesehen sind, um entsprechende seitliche Wände (19) parallel zueinander und senkrecht zu bewegen, um bei Annäherung aneinander die Last zumindest während des Ersetzvorgangs der mit der Ersatzplatte (S) zu ersetzenden Palette (P) festzuspannen, und bei Entfernung voneinander die Last am Ende des Ersetzvorgangs freizugeben.

10. Vorrichtung gemäß einem der vorhergehenden Ansprüche, **dadurch gekennzeichnet, dass** sie zwei Absatzelemente (21) umfasst, die seitlich zu dem Lagerbereich des Trägerelements (4) sind und von mindestens einem Hubantriebselement (33) zwischen einer unteren Position, in der ein solches Absatzelement (21) auf das Gleitelement (3) oder den Boden trifft und einem oberen Zustand, in dem es angehoben ist, senkrecht betrieben werden; jedes dieser Absatzelemente (21) ist mit mindestens einem Hakenteil (23) versehen, das vorgesehen ist, um im abschließenden Abwärtshub des entsprechenden Absatzelements (21) in eine entsprechende Seite einer zu ersetzenden Palette (P) einzuhaken, die in dem Lagerbereich des Gleitelements (3) platziert ist, d.h. an der dem Ladebereich gegenüberliegenden Seite des Fensters (11); wobei jedes Hakenteil (23) einen Körper (27) umfasst, der drehbar um das entsprechende Absatzelement (21) angelenkt ist, um sich um eine Achse parallel zu der Schieberichtung des Gleitelements (3) parallelen Richtung zu drehen, ein solcher Körper (27) weist einen Arm (29) auf, der sich ungefähr in einer radialen Richtung von dem Körper erstreckt und elastisch von dem entsprechenden Absatzelement (21) vorspringend über ein dem Körper (27) zugeordnetes Federelement (35) gehalten wird, wobei der Körper (27) ferner mindestens einen vorspringenden Anschlag (31) umfasst, der vorgesehen ist, um mit dem Gleitelement (3) oder mit dem Boden (B) in der unteren Position dieses Absatzelements (21) zusammenzutreffen, um das Hakenteil (23) so zu drehen, dass sich der Arm (29) innerhalb des Profils seines Absatzelements (21) befindet.

## Revendications

1. - Dispositif efficace pour le remplacement d'une palette à remplacer (P) supportant une charge par une palette de remplacement (S) pour ladite charge, et comprenant :
- un élément de coulissement (3) relié à au moins un élément de cadre (5) et destiné, dans une condition de fonctionnement du dispositif (1), à être fixé ou placé sur un sol ou plan (B) sensiblement horizontal, ledit élément de coulissement (3) définissant un plan de coulissement parallèle et adjacent au sol ou plan (B) et ayant une longueur de coulissement prédéterminée ;
- un élément de cloison vertical (9), placé transversalement à la partie centrale de l'élément de coulissement (3) et surélevé par rapport à ce dernier, formant une fenêtre inférieure (11) entre les parties avant et arrière de l'élément de coulissement (3) ;
ledit dispositif (1) comprenant au moins un élément de translation (2) comportant :
- un élément de support (4) destiné à supporter au moins une palette à remplacer (P) et déplaçable le long de l'élément de coulissement (3) pour déplacer en translation cette palette (P) de la partie avant à la partie arrière de l'élément de coulissement (3) à travers la fenêtre (11) dont le bord supérieur est à une hauteur prédéterminée ;
- au moins un élément actionneur (6) interconnecté entre l'élément de coulissement (3) ou l'au moins un élément de cadre (5) et l'élément de support (4) pour déplacer en translation ce dernier (4), seul ou conjointement avec la palette à remplacer (P), le long de l'élément de coulissement (3) ;
**caractérisé par le fait que** l'au moins un élément de translation (2) comporte en outre un élément de détection et d'actionnement (8) relié à l'élément de support (4) et destiné à détecter la proximité de la palette de remplacement (S) par rapport à la partie avant de l'élément de support (4), et à actionner l'au moins un élément actionneur (6) lorsque ladite proximité est détectée.

2. - Dispositif selon la revendication 1, **caractérisé par le fait que** l'élément de détection et d'actionnement (8) comprend un moyen de détection (10) déplaçable le long d'une course de longueur prédéterminée, parallèlement à la translation de l'élément de support (4), entre deux conditions extrêmes respectivement en saillie par rapport à et en alignement avec le bord avant de l'élément de support (4), et comprend un moyen de commande (12) associé au moyen de détection (10) et destiné à actionner l'au moins un élément actionneur (6) lorsque la palette de remplacement place le moyen de détection (10) dans une position autre que la condition en saillie extrême.

3. - Dispositif selon la revendication 2, **caractérisé par le fait que** le moyen de détection (10) présente une forme allongée et est parallèle à la direction de translation de l'élément de support (4) auquel il est relié de manière coulissante au moyen d'éléments de guidage fixe (14) et mobile (16) ; l'extrémité avant (18) du moyen de détection allongé (10), dans la condition en saillie extrême, fait saillie à partir du bord avant de l'élément de support (4) d'une longueur définissant la longueur prédéterminée de la course du moyen de détection (10) et une telle extrémité avant (18) est destinée à correspondre avec le bord avant de la palette de remplacement (S), et sa (10) partie terminale arrière (20) a une longueur approximativement égale à la longueur de course prédéterminée et dans toutes les conditions autres que la condition en saillie extrême du moyen de détection (10) fait face au moyen de commande (12) en l'activant, où ce dernier (12) est fixé à la partie arrière de l'élément de support (4) au moyen d'une attache fixe ou réglable (22).

4. - Dispositif selon la revendication 3, **caractérisé par le fait que** l'élément de détection et d'actionnement (8) comprend un élément de rappel élastique (24) agissant entre l'élément de support (4) et le moyen de détection (10), conférant à ce dernier (10) une force élastique dirigée vers la condition en saillie extrême, où un tel élément de rappel élastique (24) comprend un ressort en tension ou il (24) comprend un ressort hélicoïdal (26) comprimé entre un épaulement transversal (28) du moyen de détection (10) et un rebord transversal (30) fixé à l'élément de support (4) et comprend un guide de ressort (32) engagé de manière coulissante dans les spires du ressort hélicoïdal (26) et ayant une extrémité fixée à l'épaulement transversal (28) ou au rebord transversal (30) et l'autre extrémité apte à coulisser à l'intérieur d'un siège respectif obtenu dans le rebord transversal (30) ou dans l'épaulement transversal (28), ou il (24) comprend d'autres moyens élastiques.

5. - Dispositif selon la revendication 3 ou 4, **caractérisé par le fait que** la saillie maximale de l'extrémité avant (18) du moyen de détection (10) et la partie terminale arrière (20) du moyen de détection (10) ont des longueurs égales ou supérieures au déplacement nécessaire que la palette à remplacer (P) doit effectuer pour traverser entièrement la fenêtre (11) lorsque la palette de remplacement (S) est placée sous la charge.

6. - Dispositif selon l'une quelconque des revendications précédentes, **caractérisé par le fait qu'**il comprend une pluralité de premiers moyens de roulement (34) dont les axes de rotation sont horizontaux et fixés aux bords latéraux respectifs de l'élément de support (4) pour la translation de ce dernier (4) sur l'élément de coulissement (3).

7. - Dispositif selon l'une quelconque des revendications précédentes, **caractérisé par le fait que** l'élément de coulissement (3) comporte une paire de guides (36) ayant des parois longitudinales respectives verticales et parallèles à la direction de translation de l'élément de support (4), et **par le fait qu'**il comprend une pluralité de seconds moyens de roulement (38) dont les axes de rotation sont verticaux et fixés aux bords latéraux respectifs de l'élément de support (4) ; où de tels seconds moyens de roulement (38) roulent le long des guides (36) pour déterminer la direction de ladite translation.

8. - Dispositif selon l'une quelconque des revendications précédentes, **caractérisé par le fait que** l'élément de cadre (5) comprend deux montants (7) espacés l'un de l'autre, verticaux et fixés à des côtés respectifs et opposés de la partie centrale de l'élément de coulissement (3), séparant une partie de chargement avant par une partie de stockage arrière de ce dernier (3), et **par le fait que** l'élément de cloison (9) est articulé à l'un de tels montants (7) et, dans la condition fermée, il vient en butée contre l'autre montant (7) tandis que, dans sa condition ouverte, il permet de retirer les palettes à remplacer collectées dans la partie de stockage.

9. - Dispositif selon la revendication 8, **caractérisé par le fait que** l'élément de cadre (5) porte une paire de supports latéraux (15) verticaux et placés latéralement à la partie de chargement de l'élément de support (4) ; où ces supports latéraux (15) comportent des translateurs respectifs (17) destinés à déplacer des parois latérales correspondantes (19), mutuellement parallèles et verticales, en rapprochement mutuel pour serrer la charge au moins pendant le remplacement de la palette à remplacer (P) par la palette de remplacement (S), et en détachement mutuel pour libérer la charge à la fin dudit remplacement.

10. - Dispositif selon l'une quelconque des revendications précédentes, **caractérisé par le fait qu'**il comprend deux éléments de rebord (21), situés latéralement à la partie de stockage de l'élément de support (4) et actionnés verticalement par au moins un élément actionneur de levage (33) entre une position basse, dans laquelle ledit élément de rebord (21) rencontre l'élément de coulissement (3) ou le sol, et une condition haute dans laquelle il est relevé ; chacun de ces éléments de rebord (21) comporte au moins un élément d'accrochage (23) destiné, dans la course de descente finale de l'élément de rebord (21) respectif, à accrocher un côté respectif d'une palette à remplacer (P) placée dans la partie de stockage de l'élément de coulissement (3), qui est du côté de la fenêtre (11) opposé à la partie de chargement ; où chaque élément d'accrochage (23) comprend un corps (27) articulé de manière rotative à l'élément de rebord (21) respectif afin de tourner autour d'un axe parallèle à la direction de translation de l'élément de coulissement (3), un tel corps (27) ayant un bras (29) qui s'étend approximativement dans une direction radiale à partir du corps et maintenu élastiquement en saillie à partir de l'élément de rebord (21) respectif au moyen d'un élément élastique (35) associé audit corps (27), lequel comprend en outre au moins une butée saillante (31) destinée à rencontrer l'élément de coulissement (3) ou le sol (B) dans la position basse d'un tel élément de rebord (21) afin de faire tourner l'élément d'accrochage (23) en plaçant le bras (29) à l'intérieur du profil de son élément de rebord (21).
